# EUROPEAN PATENT APPLICATION

(11) **EP 2 679 318 A1**
(43) Date of publication of application: **01.01.2014**
(21) Application number: 13173473.3
(22) Date of filing: 25.06.2013
(51) Int. Cl.: B21C 37/15, B23K 11/06

(54) **Method of manufacturing a flattened tube for use in heat exchangers and welding system for manufacturing a flattened tube**

(30) Priority: 27.06.2012 US 201261665218 P; 14.03.2013 US 201313830827
(71) Applicant: Cerro Flow Products LLC, St. Louis MO 63166-6800 (US)
(72) Inventor: Arment, Bradley, Shelbyville, Missouri 63469 (US); Arndt, Barton L., Lebanon, Illinois 62254 (US); Nixon, Forrest, Coloumbia, Illinois 62236 (US)
(74) Representative: Grünecker, Kinkeldey, Stockmair & Schwanhäusser

(57) **Abstract**

Methods for forming flattened tubes are described herein. In one embodiment, internal fins (612) formed on an interior surface of a round tube (600) define a plurality of internal cross channels thereon. The tube (600) is flattened and the internal fins (612) welded together at localized contact points without the use of a brazing or cladding material. The invention also relates to a welding system for manufacturing a flattened tube.

## Description

### CROSS-REFERENCE TO RELATED APPLICATIONS

The present application is a continuation-in-part of co-pending U.S. Patent Application No. 13/077,621, titled FLATTENED TUBES FOR USE IN HEAT EXCHANGERS AND OTHER SYSTEMS, AND ASSOCIATED METHODS OF MANUFACTURE AND USE, filed on March 31, 2011, which claims priority to U.S. Provisional Application No. 61/323,279, titled FLATTENED TUBES FOR USE IN HEAT EXCHANGERS AND OTHER SYSTEMS, AND ASSOCIATED METHODS OF MANUFACTURE AND USE, filed on April 12, 2010, and the present application further claims priority to U.S. Provisional Application No. 61/665,218, titled METHODS FOR MANUFACTURING TUBES FOR USE IN HEAT EXCHANGERS AND OTHER SYSTEMS, filed on June 27, 2012, all of the above-listed applications are incorporated herein by reference in their entireties.

### PATENTS AND PATENT APPLICATIONS INCORPORATED BY REFERENCE

The following patents and patent applications are also incorporated herein by reference in their entireties: U.S. Patent No. 5,881,592, titled "FLOATING PLUG FOR DRAWING OF TUBES," and filed Apr 22, 1998; U.S. Patent No. 7,942,456, titled "FLUID CONDUITS WITH INTEGRAL END FITTINGS AND ASSOCIATED METHODS OF MANUFACTURE AND USE," and filed January 4, 2008; U.S. Patent No. 7,987,690, titled "FLUID CONDUITS WITH INTEGRAL END FITTINGS AND ASSOCIATED METHODS OF MANUFACTURE AND USE," and filed June 11, 2008; U.S. Patent Application No. 12/242,203, titled "INSULATED FLUID CONDUIT ASSEMBLIES AND ASSOCIATED METHODS OF USE AND MANUFACTURE," and filed September 30, 2008; and U.S. Patent Application No. 13/193,525, titled "FLATTENED FLUID CONDUITS FOR USE IN HEAT EXCHANGERS AND OTHER SYSTEMS, AND ASSOCIATED METHODS OF MANUFACTURE AND USE," and filed July 28, 2011.

### TECHNICAL FIELD

The following disclosure relates generally to methods of forming tubes that are at least partially flattened, such as flattened copper tubes and, more particularly, to welding flattened tubes having internal channels with attached contact points.

### BACKGROUND

Copper tubing has many uses in heating, ventilation, and air conditioning (HVAC) applications, Round copper or copper alloy tube, for example, is often used for condenser and evaporator coils in heat exchangers. Flattened copper or alloy tubing is often used in low pressure radiator applications, In these applications, individual lengths of flattened copper or aluminum tubes are typically positioned between alternating rows of fin stock. This type of flat tube heat exchanger will not work for higher internal pressure applications because the flattened copper tube when pressurized (with, for example, a refrigerant such as R410A), it ovalizes and distorts, pressing against the adjacent fins. This can create distortion in the fins which can impede airflow through the heat exchanger coil and reduce heat transfer performance. Heavier fin stock can be used to reduce tube distortion, but the heavier fin stock results in a greater air pressure drop through the fins, which reduces performance and increases cost. Moreover, as the flattened copper tube expands and contracts during operation cycles, premature tube failure may occur due to metal fatigue.

Various attempts have been made to reduce tube distortion by brazing the inner surfaces of the tube together at discrete locations. U.S. Patent No. 3,662,582, for example, discloses a flattened copper tube having a plurality of internal fins. A piece of double-sided brazing material is inserted into the tube between the fins, and heat is applied to melt the brazing material and attach the tips of the internal fins together in the locations where they contact each other. U.S. Patent No. 5,586,598 discloses an aluminum tube having brazing material clad on the internal fin tips which are brazed together after the tube is flattened. One of the disadvantages associated with both of these approaches is that the brazing material and the associated labor and capital equipment adds cost to the flattened tube. The information disclosed in U.S. Patent Noes. 3,662,582 and 5,586,598 is incorporated herein in its entirety by reference.

Flat aluminum tubes for use in heat exchangers also exist. This type of tube, commonly referred to as "microchannel tube," is typically an extruded tube with several parallel ports or channels. The disadvantage of microchannel aluminum tubing, however, is that the internal channels are parallel to the longitudinal axis of the tube. This prevents the refrigerant from circulating around the interior of the tube during use. As a result, the channels closest to the leading edge of the microchannel tube tend to dry out. The microchannel configuration also restricts refrigerant distribution between channels at the entry end of the tube. Both of these factors can limit the performance of the heat exchanger.

### BRIEF DESCRIPTION OF THE DRAWING

Figure 1 is an isometric view of a round tube having a plurality of internal fins configured in accordance with an embodiment of the disclosure.

Figure 2 is an end view of the copper tube of Figure 1 after it has been flattened in accordance with an embodiment of the disclosure.

Figure 3A is a top view of the flattened tube of Figure 2 illustrating the cross-paths of the internal fins and the contact points thereof. Figure 3B is a cross-sectional end view of the flattened tube taken substantially along line 3B-3B in Figure 3A and illustrating the contact points of the taller fins.

Figure 4A is a perspective view of a flattened tube configured in accordance with an embodiment of the disclosure.

Figure 4B is a perspective view of the tube of Figure 4A after partial expansion in accordance with an embodiment of the disclosure.

Figures 4C and 4D are cross-sectional views of a flattened tube configured in accordance with one or more embodiments of the disclosure.

Figure 5A is a partially schematic elevation view of a heat exchanger using flattened copper tubes configured in accordance with additional embodiments of the present disclosure. Figure 5B is an enlarged view of one of the tubes from Figure 5A.

Figure 6A is a block diagram of a welding machine configured in accordance with one or more embodiments of the present disclosure.

Figure 6B is a schematic side view of an embodiment of the welding machine of Figure 6A.

Figure 6C is an enlarged view of the welding machine of Figure 6B.

Figure 6D is a graph of a temperature profile during operation of the welding machine of Figure 6B.

### DETAILED DESCRIPTION

The present disclosure describes various methods of forming flattened tubes, such as flattened copper tubes having interior surfaces with a plurality of cross-channels that are attached at selected points to provide the tube with sufficient strength to substantially maintain its shape at HVAC refrigerant operating pressures. In one embodiment, for example, a flattened tube can be manufactured by first producing a round copper tube having a plurality of inwardly-extending ridges or fins that describe a helical path around the interior surface of the tube. The internal fins can be evenly spaced, and can include a plurality of short fins and a plurality of tall fins at selected intervals. After the internal fins have been formed, the tube is flattened to produce an oblong, oval cross section in which the tips of the opposing tall fins contact each other at cross-over points. The contact points form a pattern that can be varied based on the helix angle of the fins and/or the number of tall fins around the interior surface of the tube.

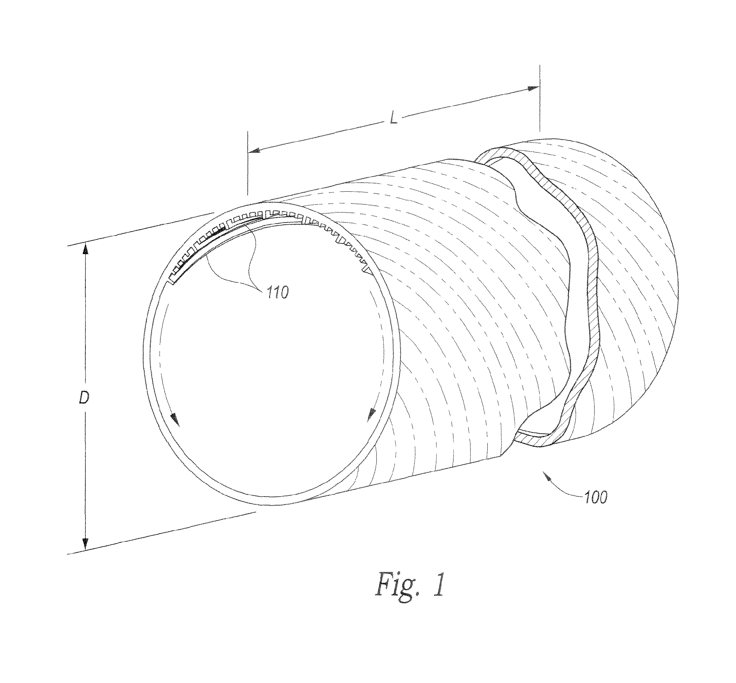

In one aspect of the present disclosure, the internal contact points of the tall fins can be spot welded together without the use of a cladding and/or brazing material. For example, the internal fins of the present disclosure can be spot welded together at selected locations using various resistance welding techniques, induction welding techniques, high frequency welding techniques, friction welding techniques, and/or other welding techniques in which the energy for the welding operation is applied to the outer surface of the flattened tube, and is transferred through the tube wall and the points of contact on the inner surface. As described in greater detail below, spot welding or otherwise attaching the contact points of the high fins together provides the tube with substantial strength that can resist substantial distortion at relatively high operating pressures. In addition, the pattern and spacing of the spot welded points can provide for controlled expansion into external fins to provide effective mechanical bonding for purposes of heat transfer without excessive distortion of the external fins. These and other aspects of the present disclosure are described in greater detail below, Certain details are set forth in the following description and in Figures 1-6C to provide a thorough understanding of various embodiments of the disclosure. Other details describing well-known structures and systems often associated with the manufacturing and use of copper tubes, flattened copper tubes, heat exchangers, etc., have not been set forth in the following disclosure to avoid unnecessarily obscuring the description of the various embodiments.

Many of the details, dimensions, angles and other features shown in the Figures are merely illustrative of particular embodiments of the disclosure. Accordingly, other embodiments can have other details, dimensions, angles and features without departing from the spirit or scope of the present invention. In addition, those of ordinary skill in the art will appreciate that further embodiments of the invention can be practiced without several of the details described below.

In the Figures, identical reference numbers identify identical, or at least generally similar, elements, To facilitate the discussion of any particular element, the most significant digit or digits of any reference number refers to the Figure in which that element is first introduced. For example, element 110 is first introduced and discussed with reference to Figure 1.

Figure 1 is a partially cutaway isometric view of a round tube 100, such as, for example, a copper tube, having a plurality of internal ribs or fins 110 configured in accordance with an embodiment of the disclosure. In one aspect of this embodiment, the fins 110 extend inwardly in a helical pattern around the inside of the tube 100. Although only a portion of the fins 110 are illustrated in Figure 1 for ease of illustration, in this embodiment the fins 110 extend around the entire interior surface of the tube 100. As described in greater detail below, the fins can include both high fins and low fins equally spaced in a regular or repeating pattern around the inner circumference of the tube 100. In other embodiments, other types of fins and/or spacing can be used.

In some embodiments, the fins 110 can incorporate two separate sections--a broader base lower section and a narrower upper section. These profiles can allow proper forging of opposing fins while providing clearance for fluid flow along the tube. The projection designs are further prepared with an understanding of resistance projection welding, allowing maximization of resulting weld strengths.

In some embodiments, the base tube stock may be made using the same equipment for manufacturing enhanced copper tubing integrated into current production heat exchangers. The tuba 100, for example, can be provided in various stock lengths L of from about one foot to about 12 feet, or about 10 feet, or in a coil of several thousand feet. A primary difference is that 8 to 15 macro-fins are created around the interior surface of the tube 100 instead of 50 to 70 micro-fins. Prototype tube stock may be made from, for example, the same copper alloy (CDA 122) and same processing equipment as conventional round tubes. This tube 100 can have, for example, an outer diameter of approximately 12.7 mm (or 0.5 inch), wall thickness of 0.25 mm (0.010-inch), and fin height of 0.4 mm (0.016 inch) or taller.

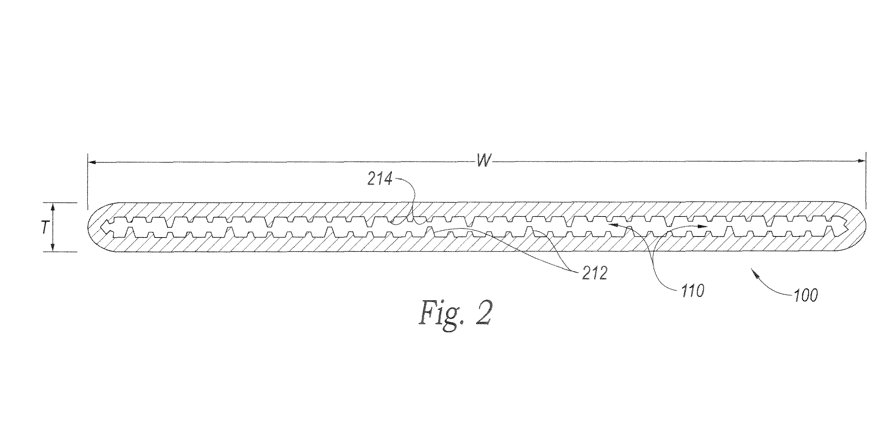

Figure 2 is an enlarged end view of the tube 100 after it has been flattened in accordance with the present disclosure. Referring first to Figure 2, in the illustrated embodiment the tube 100 has been flattened into an oblong or oval cross-section having a cross-sectional thickness T and a width W across the flattened side portions. The thickness T can be from about .02 inch to about .25 inch, or about .060 inch. The width W can be from about .25 inch to about 3 inches, or about .71 inch. As those of ordinary skill in the art will appreciate, the foregoing dimensions of the flattened tube 100 are merely illustrative of various embodiments. Accordingly, other embodiments of the present disclosure can include flattened tubes having different widths, thicknesses, shapes, spot weld patterns, etc. depending on the particular application of use and/or a number of different variables including, for example, the wall thickness of the tube, the outer diameter of the tube, the amount of flattening, etc. Therefore, those of ordinary skill in the art will appreciate that various embodiments of the invention described herein are not necessarily limited to any particular tube configuration, but extend to all such configurations falling within the scope of the claims.

In the illustrated embodiment, the internal fins 110 include a plurality of first fins 212 and a plurality of shorter, second fins 214. For ease of reference, the first fins 212 will be referred to herein as "the tall fins 212," and the second fins 214 will be referred to as "the short fins 214." The terms "tall" and "short" are of course relative, and simply indicate that the tall fins 212 are taller than the short fins 214. The tall fins 212 and the short fins 214 can be evenly spaced around the interior surface of the tube 100 in various patterns. In the illustrated embodiment, for example, the tube 100 includes a repeating pattern of one tall fin 212, four short fins 214, another tall fin 212, four more short fins 214, etc. As described above with reference to Figure 1, the fins 212 and 214 define helical grooves or channels around the inside of the tube 100 prior to flattening. Once flattened, however, the fins extend diagonally across the interior surface of the tube 100, as described in greater detail below. In other embodiments, flattened tubes configured in accordance with the present disclosure can include other fin patterns and fin spacing. For example, in some embodiments, the tube 100 may include only the first fins 212 without the second fins 214. In some further embodiments, for example, the first fins 212 and the second fins 214 can be the same height.

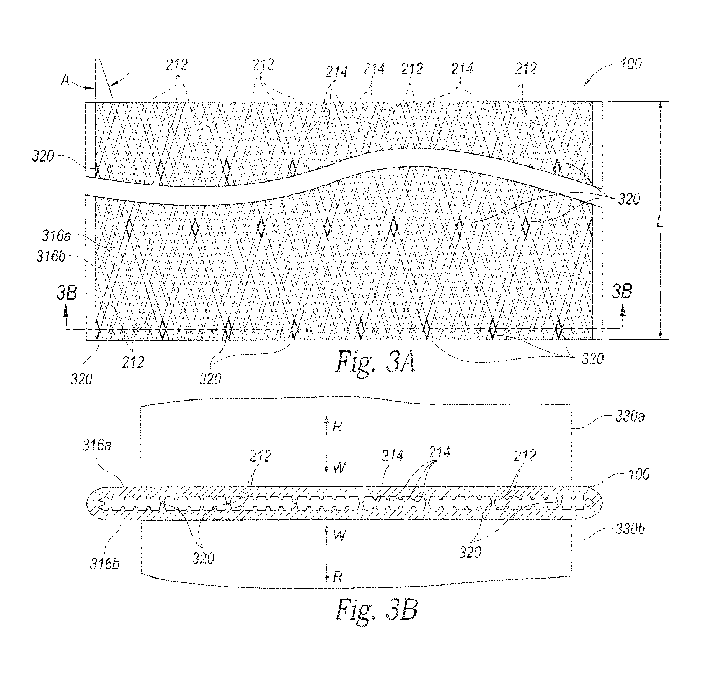

Figure 3A is a top or plan view of the flattened tube 100, and Figure 3B is a cross-sectional end view of a portion of the flattened tube 100 during a spot welding process. Referring first to Figure 3A, as this view illustrates the tall fins 212 and the adjacent short fins 214 extend along relatively straight, overlapping or crisscrossing diagonal paths after the tube 100 has been flattened. For example, the fins 212 and 214 can extend at a helix angle A of from about 5 degrees to about 60 degrees, or about 10 degrees to about 45 degrees, or about 30 degrees relative to a longitudinal axis of the flattened tube 100.

Referring to Figures 3A and 3B together, the flattened tube 100 includes a first sidewall portion 316a and an opposite second sidewall portion 316b. The tip portions of the tall fins 212 on the interior surface of the first sidewall portion 316a contact the tip portions of the tall fins 212 on the opposite interior surface of the second sidewall portion 316b at a plurality of contact points 320. In the illustrated embodiment, the rows of contact points 320 are evenly spaced in both the longitudinal and transverse directions of the flattened tube 100. Accordingly, the short fins 214 which extend between the contact points 320 do not contact each other and instead describe crisscrossing diagonal pathways or channels that refrigerant or other pressurized fluids can circulate through during use of the flattened tube 100. The cross-channel internal structure of the tube 100 allows refrigerant to circulate through the open pathways and move to the respective leading edges of the flattened tube to reduce the tendency for the refrigerant to dry out in these regions, as is typically experienced with conventional flattened tubes having longitudinal and/or isolated channels.

As shown in Figure 3B, the contact points 320 of the tall fins 212 can be attached using, for example, a spot welding machine having a first tool portion 330a and a second tool portion 330b. In the illustrated embodiment, the first tool portion 330a can be a first electrode and the second tool portion 330b can be an opposing second electrode. In operation, the opposing tool portions 330 are moved away from each other in direction R, and the tube 100 is positioned between the opposing tool portions 330. The tool portions 330 are then moved back toward each other in direction W to clamp the sidewall portions 316 together and introduce a concentrated welding current that passes through the touching tip portions of the tall fins 212 and melts or otherwise fuses the metal together at the contact points 320. After the tall fins 212 have been welded together at the contact points 320, the tool portions 330 move apart in the direction R and release the flattened tube 100. The next section of the tube 100 can then be positioned between the tool portions 330 and welded together in the manner described above.

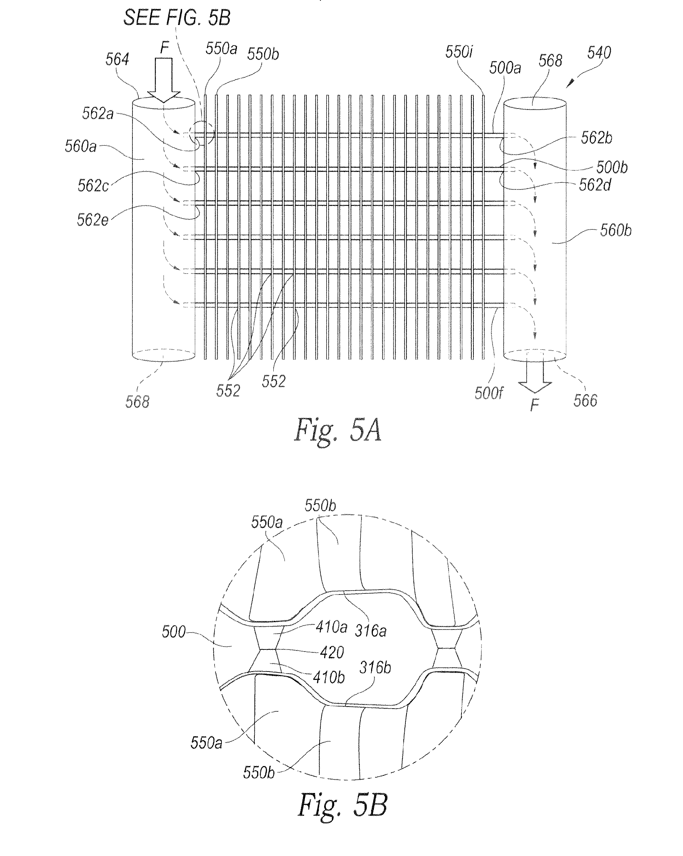

In other embodiments, as described in more detail below with reference to Figures 5A-6B, the tool portions 330 can be configured as opposing rollers that clamp the sidewall portions 316 and weld the contact points 320 together in a continuous operation. For example, the tool portions 330 can be configured to roll on parallel axes that extend perpendicularly relative to the longitudinal axis of the flattened tube 100, and apply welding current to the portion of the tube 100 between the rollers. In some embodiments, for example, the tool portions 330 can be configured to simultaneously flatten the tube 100, and apply a controlled weld current to the tube 100 to weld the contact points 320 together. In other embodiments, other types of welding machines having other types of tools, electrodes, etc. can be used to join or attach the tall fins 212 together at the contact points 320. Moreover, the welding machines can use other spot welding techniques, such as high frequency welding, induction welding, friction welding, etc., to locally join or otherwise attach the opposing tall fins 212 together. Regardless of the particular welding machine or technique used, in the foregoing embodiments the tall fins 212 can be welded together in controlled patterns so that only selected fin tips are welded rather than all fin tips. Moreover, although one spot weld pattern is illustrated in, for example, Figure 3A, in other embodiments other spot weld patterns can be used. Other patterns may be dictated by, for example, the particular application of use, operating pressure, operating temperature, cost, etc.

In some embodiments, the tool portions 330 may be utilized in a resistance seam welding system. The tool portions 330 may be banded with a high melting point and/or high resistivity material. A resistance seam band on the tool portions can be relatively thin. The tube 100 can act as a shunt path, facilitating localized resistance heating of the tool portions at locations in contact with the tube. Process parameters are then controlled to provide sufficient heat to the tube allowing individual joints to form.

In some embodiments, contact forces (compressive forces between the tool portions 330) can allow indirect seam welding of the contact points 320 in the tube 100. For example, the tool portions 330 can be configured to provide compressive forces that allow a minimum and uniform contact resistance between the tool portions 330 and the tube 100 to forge the fin contact points 320 during welding. The minimum and uniform contact resistance can prevent localized overheating at the wheel/tube interface, and forging the contact points 320 can allow proper bonding at sufficient joining temperatures. Force instability (related to machine design) can result in a corresponding variability of individual welds at the fin cross-over points.

In some embodiments, solid state bonding can be accomplished by heating the tube and fins to a necessary forging temperature, then providing the above-noted forging action through continuous deformation under the tool portions 330. The bonding can occur, for example, by displacement and dissolution of contaminants residing on surfaces of the fins themselves. A combination of the fin temperature and the level of force applied to individual cross-over points 320 can form joints at the contact points 320. The resulting joints may be characterized by localized displacement of material at the contact points 320 (flash roll-out) and sufficient displacement to simultaneously create effective joints and provide a flow path through the product. The consistency of the joints may be defined both in terms of uniformity of the individual joints and stability of the overall profile of the tube 100.

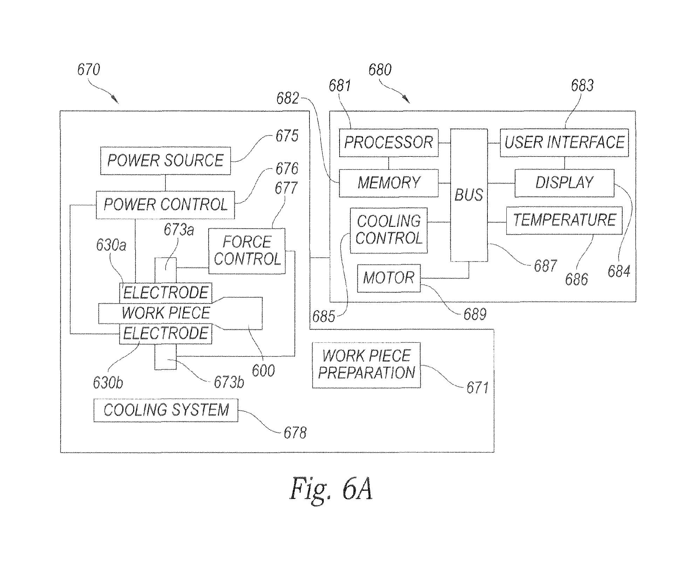

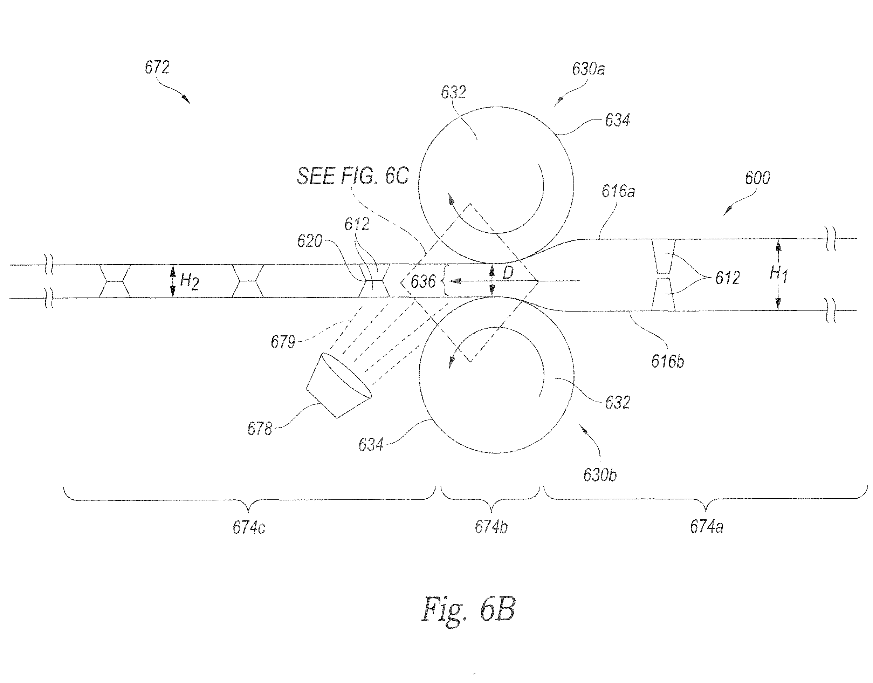

As described in further detail below with reference to Figures 6A and 6B, after bonding a cooling system (not shown) may be configured to flood, spray, immerse, or otherwise apply a coolant to the tube 100 as it is processed through the tool portions 300. As those of ordinary skill in the art will appreciate, applying the coolant to the tube 100 can stabilize tube temperatures before, during, and/or after processing; form strong joints while the tool portions 330 compress the tube 100; and/or prevent damage to the tool portions 330 themselves. In some embodiments, the applied cooling water may be below roughly 100°F to about 40°F.

The tube 100 welded with the technology described herein can result in consistent joints and profile both across and along the tube 100: Detailed examination of resulting welds at the contact points 320 has shown that uniform forging can occur at the fin cross-over points both across and along the length of the tube 100. Destructive testing indicates a similar uniformity in performance. Further, in some embodiments, the process described above can maintain final thicknesses of the tube 100 to within 0.001 in.

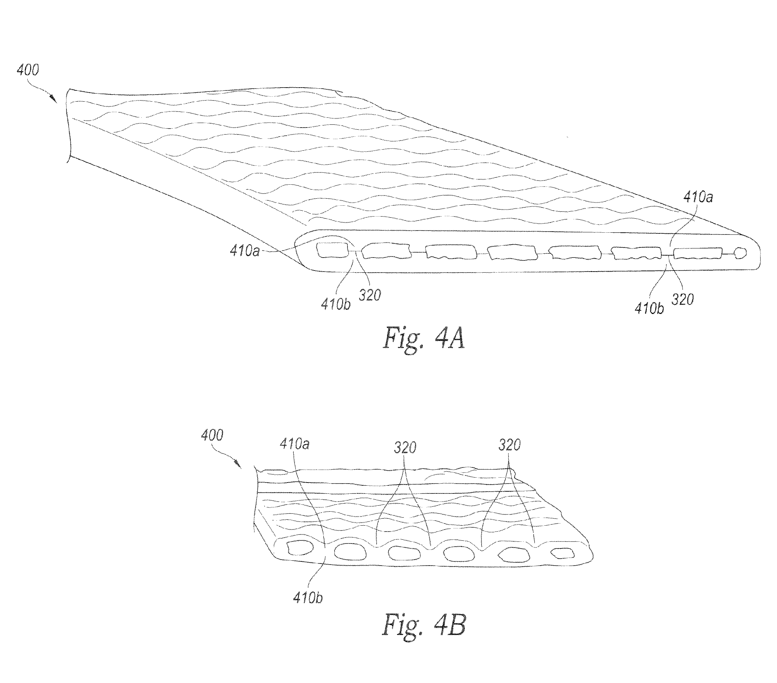

Figures 4A-4D show flattened tubes formed in accordance with various embodiments of the disclosure. Figure 4A is a perspective view of a tube 400 configured in accordance with an embodiment of the disclosure. In the illustrated embodiment, the tube 400 is flattened and one or more upper fins 410a are welded to one or more lower fins 410b at the contact points 320. The walls of the tube 400 as illustrated are capable of reacting well under internal pressure. Due to the spacing of the welds and ductility of copper, pressurization of the tube may cause plastic deformation in the tube walls between the welds. Expansion of the tube walls under pressure can cause mechanical interference between the tube 400 and external fins (not shown) creating a thermal conduction path between the refrigerant and air. The extent of this deformation varies significantly depending on wall thickness and temper, but may be observed between, for example, 0.05 mm and 0.38 mm (0.002 inch to 0.015 inch). In some embodiments, for example, the tube 400 may be capable of resisting internal pressures in excess of 1000-psi. With proper design, over-pressurization of the tube 400 can allow for inter-weld expansion, allowing mechanical contact with adjacent fins, improving thermal performance of devices fabricated with the product and reducing the pressure drop within the tube.

Figure 4B illustrates the tube 400 of Figure 4A after being hydraulically and/or pneumatically expanded. In the illustrated embodiment, or example, when the tube 400 is pressurized with fluid it may expand slightly in the areas between the spot welds/contact points 320 (see Figures 3A and 3B) in proportion to the applied pressure. The controlled expansion of the tube 400 can provide a means for beneficially maintaining thermal contact between the tube 400 and the external fins without brazing the external fins to the tubes 400. In a further aspect of the present disclosure, this expansion can be controlled by selective spacing of the spot-welded fin contact points 320 (e.g., tighter spacing may result in less expansion and/or looser spacing may result in greater expansion), by varying the wall thickness of the tube, by annealing or stress relieving of the tube, and/or by selective use of internal pressure. The spot weld spacing can be varied by varying the locations of the contact points or by only welding selected contact points.

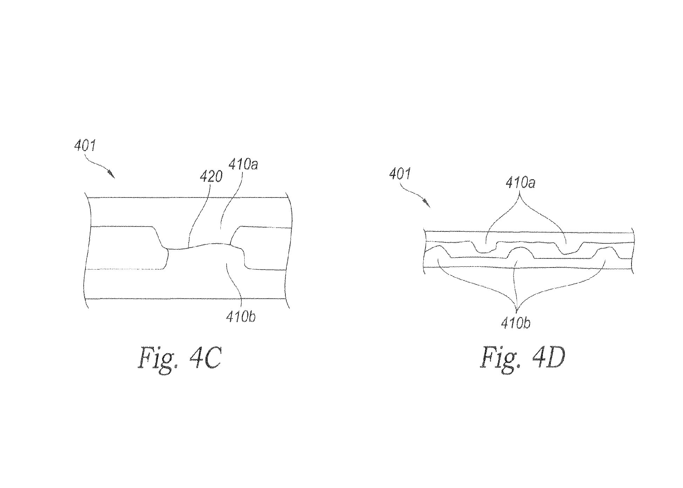

Figures 4C and 4D show cross-sectional views of a tube 401 fabricated using the techniques described above. Figure 4B shows a portion of the tube 401 where the upper fin 410a intersects the lower fin 410b at a contact or bond point 420. Conversely, Figure 4C shows a portion of the tube 401 where the upper fins 410a and lower fins 410b do not intersect and no weld is made. In some embodiments, the methods described herein can produce tubes that are, for example, 1.2 mm (0.047 inch) thick by 18 mm (0.7 inch) wide and can withstand internal pressures, for example, of 10-MPa (1400-psi) before the welds fail and the tube takes on a more rounded shape.

Figure 5A is a plan view of a heat exchanger 540 that can also use flattened tubes configured in accordance with the present disclosure. In the illustrated embodiments, opposing header tubes 560 are used to introduce working fluid F to flattened copper tubes 500a-f and transfer the working fluid F away from the heat exchanger.

As shown in Figure 5A, for example, the first header 560a is constructed of a hollow tube having a working fluid inlet 564 at one end portion thereof and a plug 568 at the opposite end portion. The second header 560b is similarly constructed of a hollow tube having a plug 568 at one end portion thereof and an outlet 566 at the opposite end portion. Each of the header tubes 560 can also include a series of openings or apertures 562 configured to receive opposing end portions of the individual flattened tubes 500. In one aspect of this embodiment, a plurality of flat plate fins 550 extend parallel to the header tubes 560 and transverse to the flattened tubes 500 between the header tubes 560. Pressurizing the inside of the tubes 500 can cause a thermal connection between the tubes 500 and flat plate fins 550. The internal pressure can cause the walls of the tubes 500 to expand outward in the area between the welds, creating one or more mechanical contact points 552 between the walls of the tubes 500 and the fins 550. In some embodiments, the pressurization can exceed a design pressure of the tubes 500 to increase stability during operation.

In operation, the working fluid F enters the heat exchanger 540 via the inlet 564, and flows from the first header 560a into the open end portions of the individual flattened tubes 500. The working fluid F flows across the flattened tubes 500 absorbing heat from the surrounding air flow, and then into the receiving header 560d before exiting via the outlet 566. In other embodiments, one or both of the header tubes 560 can include one or more baffles and/or other suitable devices known in the art for directing or otherwise recirculating the working fluid F in different flow paths through the various flattened tubes 500. In some embodiments, the plate fins 550 can be made using similar equipment and procedures as fins for conventional heat exchangers. In other embodiments, however, the header tubes 560 can be modified to accept oval tubes instead of round tubes. Using the plate fins 550 with header tubes 560 that are oval-shaped are commercially available and are used to make radiators for heavy duty construction equipment. Figure 5B is an enlarged view of one of the tubes 500 sandwiched between two flat plate fins 550A. As described above, the tube 500A can be pressurized internally so that at least some portions of the tube 500A expand, thereby pressing against the fins 550A and allowing for increased thermal conductivity.

Figure 6A illustrates a block diagram of a welding machine 670 and a welding machine controller 680 configured in accordance with one or more embodiments of the present disclosure. The welding machine 670 includes a first electrode 630a and a second electrode 630b configured to receive a workpiece or tube 600 therebetween. The tube 600 can include, for example, any suitable metal object or device to be welded by the welding machine 670 such as, for example, a flattened metal tube, such as one or more of the tubes 100, 400, 401, 500, etc. discussed above. A workpiece preparation stage 671 cleans and otherwise prepares the tube 600 for welding. A power source 675 supplies electric power to a power control 676 configured to provide an appropriate type and amount of electrical current to the first electrode 630a and the second electrode 630b. A first actuator 673a coupled to the first electrode 630a and a second actuator 673b coupled to the second electrode 630b can be configured to drive at least one of the first electrode 630a and the second electrode 630b against the tube 600 to compress the tube 600. A force controller 677 coupled to the first actuator 673a and the second actuator 673b is configured to provide operating instructions thereto. The instructions may include, for example, an amount of force to apply to the first electrode 630a and the second electrode 630b, a timing sequence for applying force, a duration of time to apply force, etc.

The workpiece preparation stage 671 may also clean or otherwise prepare the tube 600 for welding prior to insertion into an area (e.g., a nip) between the first electrode 630a and the second electrode 630b. The workpiece preparation stage 671 can include, for examples, brushes, scrubbers, baths, or any other suitable means for removing contaminants from surface of the tube 600 before welding. The workpiece preparation stage 671 may include, for example, a vapor degreaser and/or annealed, which can be configured to remove oil and/or other impurities from the surface of the tube. As those of ordinary skill in the art will appreciate, preparing the tube for welding can, in some cases, facilitate greater heat transfer between the first electrode 630a and the second electrode 630b to the tube 600, thereby producing a stronger weld. Cleaning the tube 600 may also, for example, prevent damage to the first electrode 630a and the second electrode 630b by preventing the buildup of oxides thereon.

The power control 676 of Figure 6A can be configured to convert electric current received from the power source 675 into a suitable form for welding. For example, the power control 676 can include an inverter configured to convert alternating currents from the power source 675 to direct current for supply to the first electrode 630a and the second electrode 630b. In some embodiments, for example, the power control can also include a transformer, an inductor, etc. In other embodiments, for example, the power control 676 may be configured to first convert electricity from the power source 635 from alternating current (e.g., one-phase alternating current, three phase alternating current, etc.) to direct current. The use of alternating current in certain types of welding (e.g., resistance spot welding) may be less effective than direct current for at least the reason that the amplitude of the alternating current is negative for one half of each cycle of current. Converting the alternating current to direct current can produce electric current that has a constant, or near constant, positive amplitude. In other embodiments, the electric current may still alternate or oscillate, but have an amplitude shift such that an entire cycle of the electric current is positive. The electric current can have a frequency of any suitable value and/or can include a suitable range of low frequencies (e.g., less than 150 KHz) or high frequencies (e.g., greater than 150 kilohertz). In some embodiments, for example, the electric current can have a frequency ranging 150 KHz to 400 KHz.

The power control 676 can provide the converted current to the first electrode 630a and/or the second electrode 630b to weld at least a portion of the tube 600 together. In some embodiments, for example, the first electrode 630a and second electrode 630b can be configured to spot weld the workpiece together at predetermined locations thereon by rapidly heating a portion of the tube 600 in a welding region between the first electrode 630a and the second electrode 630b to very high temperatures (e.g., greater than 500°F). In other embodiments, for example, the first electrode 630a and the second electrode 630b can be configured to weld the tube 600 together along a continuous seam.

There first actuator 673a and the second actuator 673b can be configured to apply a compressional force to the tube 600 in conjunction with performing the welding operations described above. For example, the force controller 677 can be configured to receive instructions from the welding machine controller 680 to actuate the first actuator 673a and the second actuator 673b at approximately the same time that the first electrode 630a and the second electrode 630b weld the tube 600 together, Applying the welding and the compression simultaneously provide an advantage of a stronger weld within the tube 600 than may otherwise be possible with just one of the operations alone. In the illustrated embodiment, the welding machine includes both of the first actuator 673a and the second actuator 673b. In some embodiments, however, the welding machine may only include only one force actuator and the opposing electrode may be fixed. For example, the first actuator 673a may be configured to actuate the first electrode 630a toward the tube 600 while the second electrode 630b is configured to remain generally stationary relative to the first electrode 630a. In other embodiments, however, there may be more than two force actuators 673.

The welding machine 670 can receive instructions or commands from a welding machine controller 680. The welding machine controller 680 can include a memory 682, a user interface 683, and a display 684 coupled to a processor 881 via a bus 687. The processor 681 can be configured to execute computer-readable instructions stored on a computer-readable media for controlling various operations of the welding machine 670. For example, the processor 681 can be configured to receive data and information from various components of the welding machine and provide operating instructions to the welding machine 670. The welding machine controller 680 can include various inputs such as, for example, temperature 686 that can include temperature readings from the welding machine 670. The welding machine controller 680 can also include a cooling control 685 configured to provide instructions for cooling to the cooling system 678 after the tube 600 has left the area between the first electrode 630a and the second electrode 630b. A motor connected to the processor 681 can be configured to drive or otherwise operate the first electrode 630a and the second electrode 630b. In some embodiments, the welding control can be located proximal to the welding machine 670 such as, for example, in and/or on a panel adjacent to the welding machine 670. In other embodiments, the welding machine controller 680 may be located in any suitable location such as, for example, a facility central control computer or a remote control system connected to the welding machine 670 by a network (e.g., the Internet, a wireless network, a wide area network, an Ethernet network, a private internet network, etc).

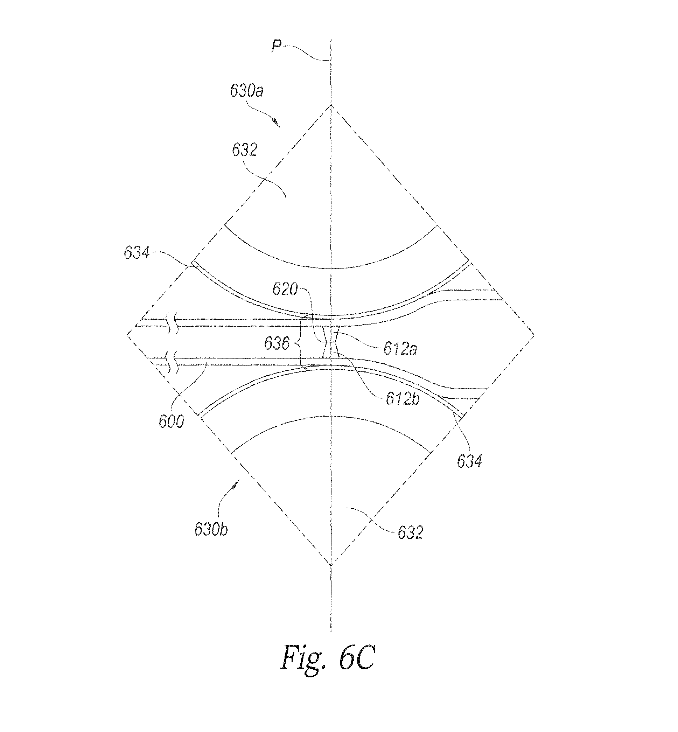

Figure 6B illustrates a side view of one embodiment of the welding machine of Figure 6A. Figure 6C is an enlarged view of a portion of the welding matching of Figure 6B. Referring to Figure 6B and Figure 6C, together, a welding machine 672 includes a first stage 674a, a second stage 674b and a third stage 674c. The first stage 674a receives the tube 600 (e.g., a flattened or at least partially flattened tube, such as, for example, the tube 100 described above). The first stage 674a may include, for example, the workpiece preparation stage 671 (Figure 6A). The second stage 674b can include the first electrode 630a and/or the second electrode 630b, which are configured to weld and/or compress the tube 600 in a welding area or nip 636 therebetween. The third stage 674c includes a portion of the welding machine 672 after the tube 600 has been flattened and the fins 612 therein have been welded together.

In the illustrated embodiment of Figure 6B, the first electrode 630a and the second electrode 630b each include a welding roller 632 surrounded by an outer band 634. The welding roller 632 can be a disk, a wheel, a roller or any other suitable rotatable apparatus configured for welding (e.g., resistance spot welding). The welding roller 632 can be made from any suitable conductive material such as, for example, copper. In some embodiments, for example, the welding roller 632 can comprise a disk having an outer diameter ranging from 8 inches to 24 inches, or preferably 13.5 inches, while in other embodiments, the welding roller 632 can have any suitable diameter.

The outer band 634 can be made from a refractory metal, such as, for example, tungsten, molybdenum, niobium, tantalum, rhenium, and/or alloys thereof, having a high melting temperature and/or a high electrical resistance. In some embodiments, for example, the outer band 634 can be made from a mixture of one or more refractory metals (e.g., tungsten or molybdenum) and copper (e.g., a tungsten copper mixture). In other embodiments, for example, the outer band 634 can also be made from stainless steel, a nickel-chromium super alloy (e.g., Inconel™), a copper alloy, and/or another suitable material configured to provide resistance for heating and to be thermally stable at a welding temperature of forging. In some embodiments, the outer band 634 can have a thickness of 0.05 inch to 0.1 inch or preferably 0.08 inch thick. In other embodiments the outer band 634 can have any suitable thickness.

The welding rollers 632 can be rotated by a motor (e.g., the motor 689 of Figure 6A) configured to rotate or otherwise drive the first electrode 630a in a clockwise manner while rotating the second electrode 630b in a counter clockwise manner. The first electrode 630a and the second electrode 630b can also be coupled to or electrically connected to an electrical source (e.g., the power source 675 of Figure 6A). While the illustrated embodiment figure 6B shows the first electrode 630a and the second electrode 630b, in some embodiments, for example, the welding machine 672 may include only one 630a, while in other embodiments there may be one or more additional electrodes 630 upstream or downstream of the rollers of the first electrode 630a and the second electrode 630b. Moreover, while the first electrode 630a and the second electrode 630b are shown in Figures 6B and 6C to be substantially coplanar along a vertical plane (e.g., along a vertical plane P as shown in Figure 6C), in some embodiments, for example, the first electrode 630a and the second electrode 630b may be horizontally separated such that first electrode 630a and the second electrode 630b are not vertically coplanar.

In operation, the tube 600 (e.g., any one the flattened tubes described above in more detail in reference to figures 2-5) in the first stage 674a includes a pair of fins 612 separate from each other and has a first entering pre-weld height H₁, As the tube 600 is fed further into the welding machine 672 toward the second stage 674b, the tube passes through the nip 636. In the second stage 674b, the tube contacts and/or engages the first electrode 630a and second electrode 630b, which can weld the fins 612 together while simultaneously flattening the tube to a second post-weld height H₂. The first electrode 630a and the second electrode 630b are configured, for example, to be approximately a distance D apart from each other based on the desired final post-weld height H₂. The tube height H₂ can range from 0.03 inch to 0.1 inch or approximately 0.60 inch. In other embodiments the tube 600 can have any suitable height.

As the tube 600 passes through the nip 636 and/or reaches the third stage 674c, the tube 600 is cooled by the cooling system 678, which can be configured to deliver a coolant 679 to cool a portion of the tube 600. The cooling system 678 can include a spray nozzle configured to deliver the coolant 679 to the tube 600 as it leaves the nip 636. The coolant 679 can be any suitable cooling liquid, solid, or gas (e.g., water, ethylene glycol, propylene glycol, etc.). As those of ordinary skill in the art will appreciate, cooling the portion of the tube 600 exiting the nip 636 immediately after welding can increase the strength of the final joints (e.g., at contact points 620) and also prevent damage to the welding portions of 630a and 630b. In some embodiments, the coolant 679 can have a temperature from approximately 100 degrees Fahrenheit down to 40 degrees Fahrenheit.

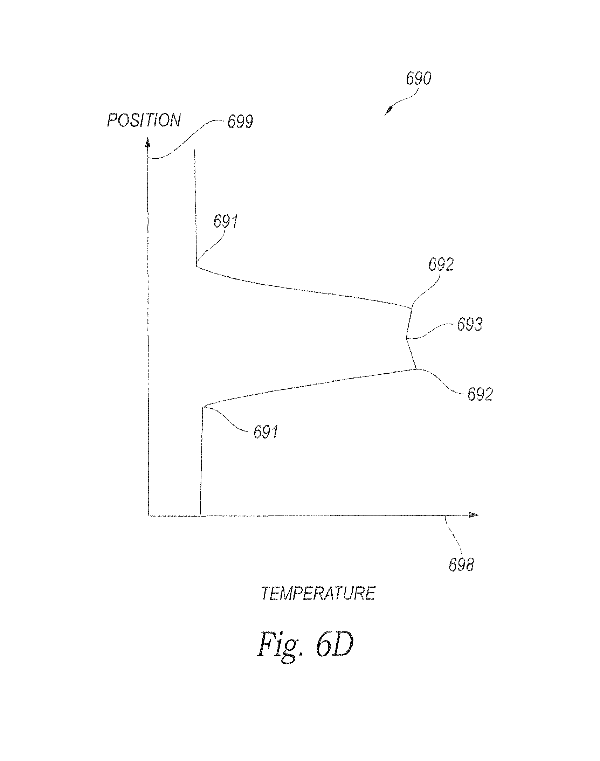

Figure 6D shows a temperature graph 690 during operation of the welding machine 672. The graph 690 includes a y-axis 699 corresponding to positions within the welding matching 672 and/or the tube 600 during welding, and an x-axis 698 corresponding to relative welding temperatures of a portion of the tube 600 (Figures 6B and 6C) between the first electrode 630a and the second electrode 630b. For example, each of the rollers 632 of the first electrode 630a and the second electrode during welding may have a first temperature 691. Each of the outer bands 634 of the first electrode 630a and the second electrode 630b, for example, may have a second temperature 692. A top fin 612a, the contact point 620, and a bottom fin 612b may have a third temperature 693. During welding, the second temperature 692 and the third temperature 693, for example, may range from approximately 1500 degrees Fahrenheit to 2000 degrees Fahrenheit, or approximately 1800 degrees Fahrenheit. The first temperature 691, however, may be significantly cooler (e.g. less than 1500 degrees Fahrenheit) during welding. As those of ordinary skill in the art will appreciate, the first temperature 691, the second temperature 692, and the third temperature 693 can vary significantly based on the selection of materials used to form the first electrode 630a, the second electrode 630b, and the tube 600.

From the foregoing, it will be appreciated that specific embodiments of the invention have been described herein for purposes of illustration, but that various modifications may be made without deviating from the spirit and scope of the various embodiments of the invention. Further, while various advantages associated with certain embodiments of the invention have been described above in the context of those embodiments, other embodiments may also exhibit such advantages, and not all embodiments need necessarily exhibit such advantages to fall within the scope of the invention. Accordingly, the invention is not limited, except as by the appended claims.

## Claims

1. A method of manufacturing a flattened tube for use in a heat exchanger, the method comprising:
forming a plurality of ridges on an interior surface of a tube having a generally
round cross-sectional shape, wherein the tube is formed from a base material, and wherein the ridges are formed from the base material;
flattening the tube into a generally oblong cross-sectional shape having a first
height;
welding the base material of individual ridges together at contact points in the
absence of a cladding or brazing material on the ridges, wherein the welding comprises compressing the tube between a first electrode and a second opposing electrode to introduce a current that passes through and joins together the contact points; and
moving at least one of the first electrode and the second electrode toward the tube
to flatten the tube to a second height less than the first height.

2. The method of claim 1 wherein the first electrode includes a first roller configured to rotate in a first direction relative to the tube and the second electrode includes a second roller configured to rotate in a second direction relative to the tube.

3. The method of claims 1 wherein each of the first electrode and the second electrode includes an outer metal band.

4. The method of claim 3 wherein the outer metal bands are made of a refractory metal or an alloy thereof.

5. The method of claim 1 further comprising cooling a portion of the tube in a welding area between the first electrode and the second electrode.

6. The method of claim 5 wherein the cooling comprises spraying the tube with a coolant having a temperature less than 100 degrees Fahrenheit.

7. The method of claim 1 further comprising cleaning an outer surface of the tube to remove contaminants prior to welding.

8. The method of claim 1 wherein the welding and the moving occur intermittently at a plurality of predetermined locations along the tube.

9. The method of claim 1 wherein forming the plurality of ridges comprises forming ridges in a generally helical path on the interior surface of the tube.

10. The method of claim 1 wherein the flattened tube has a longitudinal axis, and wherein forming the plurality of ridges comprises forming ridges parallel to the longitudinal axis on the interior surface of the tube.

11. The method of claim 1 further comprising:
forming a plurality of ridges comprises forming ridges from copper; and
welding the base material of individual ridges together comprises welding
contacting copper surfaces together.

12. The method of claim 1, further comprising controllably expanding the flattened tube by use of mechanical, hydraulic, or pneumatic force.

13. A welding system for manufacturing a flattened tube for use in a heat exchanger, the system comprising:
a first electrode opposite a second electrode configured to receive a flattened tube
therebetween and to weld individual ridges formed on an interior surface of the tube at contact points, wherein the first electrode and the second electrode each include a roller surrounded by an outer band;
an electric power source coupled to the first electrode and the second electrode
configured to provide electric current thereto; and
an actuator coupled to the first electrode and configured to apply a force thereto to
reduce the thickness of the tube from a first height to a second height as the tube passes between the first electrode and the second electrode.

14. The welding system of claim 13, further comprising a means for cleaning an outer surface of the tube.

15. The welding system of claim 13, further comprising a cooling system configured to reduce a temperature of the tube during welding,

16. The welding system of claim 13, further comprising a control system electrically connected to the first electrode, the second electrode, the power source, and the actuator, and configured to provide operating instructions thereto.

17. The system of claim 16 wherein the operating instructions include instructions for simultaneously welding and providing the downward force at a plurality of predetermined locations along the tube.

18. The system of claim 13 wherein the first electrode and the second are separated by a distance D approximately equal to the second height of the tube.

19. The system of claim 13 wherein the outer band is made from a refractory metal or an alloy thereof.

20. The system of claim 13 wherein the outer band is made from a mixture of copper and tungsten or an alloy thereof.
